# DEMANDE DE BREVET EUROPEEN

(11) **EP 2 618 006 A1**
(43) Date de publication de la demande: **24.07.2013**
(21) Numéro de dépôt: 13150884.8
(22) Date de dépôt: 10.01.2013
(51) Int. Cl.: F16B 5/02, B22D 15/02, B22D 21/04, B22D 25/02

(54) **Pièce de fonderie presentant des surfaces d'appui optimales pour recevoir un élément mécanique de serrage de type vis ou rondelle**

(30) Priorité: 20.01.2012 FR 1250573
(71) Demandeur: PEUGEOT CITROËN AUTOMOBILES SA, 78140 Velizy-Villacoublay (FR)
(72) Inventeur: Hautefeuille, Franck, 60260 Lamorlaye (FR)

(57) **Abrégé**

La pièce de fonderie (1) selon l'invention comporte au moins une surface d'appui optimale pour recevoir un élément mécanique de serrage, de type vis ou rondelle, destiné à la fixation d'un organe sur un orifice (2) de la pièce de fonderie (1). Cette surface d'appui optimale est inscrite dans une zone annulaire (« A ») formant le pourtour dudit orifice (2), et elle est formée de trois appuis (11, 12, 13) répartis dans ladite zone annulaire (« A »). Chaque appui (11, 12, 13) présente la forme d'un segment annulaire.

## Description

La présente invention concerne une pièce de fonderie, qui comporte au moins une surface d'appui optimale pour recevoir un élément mécanique de serrage de type vis ou rondelle. Elle concerne en particulier, mais de façon non exclusive, une culasse de moteur à boîtier de sortie d'eau intégré pour véhicule automobile, laquelle culasse présente au moins une surface optimale pour l'appui d'une rondelle servant à la fixation d'un organe tel qu'un thermostat piloté, par exemple.

Dans le cas d'une pièce de fonderie d'un véhicule automobile par exemple, afin de réduire la masse du véhicule, on cherche à rendre minimale la surface d'appui des têtes de vis ou des rondelles, notamment.

On a déjà cherché à perfectionner les moyens de fixation, ajustés, sur des surfaces irrégulières de pièces mécaniques obtenues par un procédé de fonderie.

Ainsi, à titre d'exemple, le document WO 2005/058547 décrit un élément d'attache par serrage, qui comporte un ensemble de tête réglable pour se mettre en prise avec une pièce à usiner, ledit ensemble de tête comprenant un doigt conçu pour se mettre en prise avec la pièce à usiner, un coin de fixation configuré pour se mettre en prise avec le doigt, et un tendeur ou « écarteur » défini pour se mettre en prise avec le coin de fixation. L'écarteur applique une force sur le coin de fixation, qui applique lui-même une force sur le doigt pour maintenir ce dernier lors de la prise de la pièce à usiner. Le doigt présente une surface inclinée, qui vient en prise avec une surface inclinée du coin de fixation. De la même façon, l'écarteur présente une surface inclinée qui vient en prise avec le coin de fixation.

Le but de la présente invention est de fournir une pièce de fonderie perfectionnée, dans laquelle au moins une surface d'appui d'un élément de serrage, de type vis ou rondelle par exemple, est réduite de façon à alléger la masse de la pièce de fonderie.

Un autre but de la présente invention est de fournir une telle pièce de fonderie perfectionnée, dans laquelle les surfaces d'appui rendues optimales permettent, d'une part, de réaliser un gain dans le procédé de fonderie mis en oeuvre pour réaliser lesdites pièces de fonderie, et d'autre part, de réduire l'usure de l'outillage d'usinage desdites surfaces d'appui.

Un autre but de la présente invention est de fournir une telle pièce de fonderie perfectionnée, qui, appliquée à une pièce de véhicule automobile obtenue par fonderie, permette un allégement du véhicule, par conséquent une baisse de son émission de CO₂.

Enfin, c'est également un but de la présente invention de fournir des surfaces d'appui optimales, qui sont de conception et de réalisation simples.

Pour parvenir à ces buts, la présente invention a pour objet une pièce de fonderie, qui comporte au moins une surface d'appui, dite optimale, pour recevoir un élément mécanique de serrage de type vis où rondelle destiné à la fixation d'un organe sur un orifice de la pièce de fonderie, ladite surface d'appui optimale étant inscrite dans une zone annulaire formant le pourtour dudit orifice. Dans cette pièce de fonderie, nouvelle, ladite surface d'appui optimale est formée de trois appuis répartis dans la zone annulaire, chaque appui présentant la forme d'un (court) segment annulaire. Ainsi, l'espace entre deux appuis étant « ajouré », il est réalisé une réduction de la masse de la pièce de fonderie.

Selon le mode préféré de réalisation de l'invention, les segments annulaires sont avantageusement inférieurs à 45° d'angle.

Selon le mode préféré de réalisation de l'invention également, les segments annulaires sont répartis angulairement de manière régulière.

De préférence la pièce de fonderie selon l'invention est réalisée à partir d'aluminium.

De préférence également, la pièce de fonderie selon l'invention est réalisée par un procédé de moulage de type « à modèle perdu », appelé aussi procédé « Lost Foam ».

Selon un exemple d'application, non limitatif de l'objet et de la portée de la présente invention, la pièce de fonderie est une culasse de moteur de véhicule, ladite culasse intégrant, notamment, de manière « monobloc », au moins le boîtier de sortie d'eau du moteur.

Selon cet exemple d'application, la surface d'appui optimale est une surface du boîtier de sortie d'eau servant d'appui à une rondelle destinée à la fixation du thermostat piloté dudit boîtier de sortie d'eau.

La présente invention a aussi pour objet un véhicule, en particulier un véhicule automobile, avec une culasse de moteur qui est une pièce de fonderie conforme à celle décrite ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue de dessus, schématique, d'une surface d'une pièce de fonderie, qui a pour fonction de servir d'appui à une rondelle, selon l'art antérieur,
- la figure 2 est également une vue de dessus, schématique, d'une surface d'une pièce de fonderie, qui a pour fonction de servir d'appui à une rondelle, mais selon la présente invention,
- la figure 3 représente le surface d'appui de la figure 2 réalisée sur une culasse de véhicule automobile, la culasse étant brute de fonderie, et
- la figure 4 représente la culasse de la figure 3 après usinage.

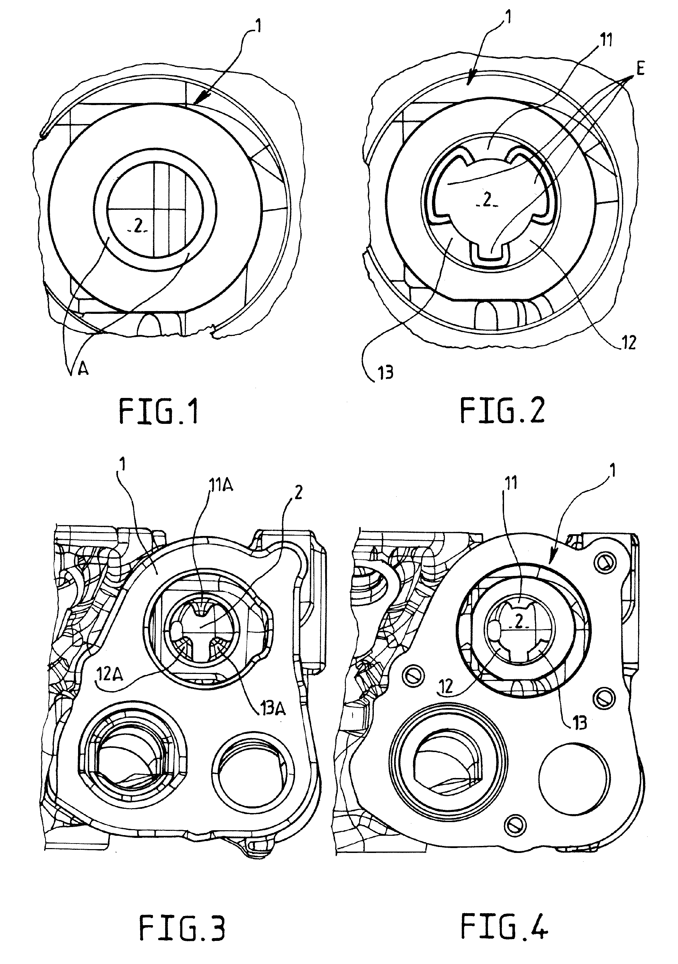

En référence au dessin de la figure 1, on a représenté, de manière très schématique, la surface d'appui d'une rondelle sur un orifice, de référence 2, d'une pièce de fonderie 1. A titre d'exemple non limitatif de l'objet et de la portée de la présente invention, la pièce de fonderie 1 peut être une culasse de moteur de véhicule automobile. Cette surface d'appui d'une rondelle est inscrite dans une zone annulaire référencée « A » formant le pourtour annulaire dudit orifice 2.

Selon le principe de la présente invention, illustré de manière schématique sur le dessin de la figure 2, la surface d'appui de la rondelle n'est plus annulaire, mais formée de trois appuis référencés 11, 12 et 13, qui sont répartis dans la zone annulaire « A ». Chaque appui 11, 12 ou 13 présente la forme d'un court segment annulaire, d'angle « α » qui peut aller de quelques degrés à environ 45° d'angle. Les espaces compris entre deux appuis consécutifs, référencés collectivement E, sont « ajouré », ce qui permet de réaliser un allégement de la pièce de fonderie 1.

Les trois appuis 11, 12 et 13 peuvent avantageusement être répartis angulairement de manière régulière.

La pièce de fonderie 1 est réalisée à partir d'aluminium, par exemple, par un procédé de moulage de type « à modèle perdu ».

Dans le présent exemple de réalisation, représenté également sur les figures 3 et 4, la culasse de moteur 1 est de type à boîtier de sortie d'eau intégré et les trois appuis servent d'appui à une rondelle destinée à la fixation du thermostat piloté du boîtier de sortie d'eau.

Sur la figure 3, on a représenté la culasse de moteur à boîtier de sortie d'eau intégré, de référence générale 1, en sortie de fonderie avec les trois appuis 11A, 12A et 13A « bruts » de fonderie. Les trois appuis sont ensuite usinés pour obtenir les appuis 11, 12 et 13, comme représentés sur la figure 4.

Il va de soi que la forme des appuis peut être différente de celle des segments annulaires 11 à 13 décrits ci-dessus. Les appuis peuvent être de forme ajustable, orientable, suivant chaque configuration particulière de pièce de fonderie et d'organe à fixer sur la surface d'appui concernée.

Il importe de noter également que l'orientation des appuis 11 à 13, qu'ils soient de forme annulaire ou autre, peut être choisie de façon à faciliter l'écoulement de la circulation d'eau s'il s'agit, par exemple, d'une surface d'appui du boîtier de sortie d'eau mentionné précédemment.

La pièce de fonderie perfectionnée décrite ci-dessus présente de nombreux avantages, parmi lesquels les avantages suivants :
- elle permet un gain en matière de la pièce, une moindre usure de l'outillage d'usinage des surfaces d'appui de la pièce et un gain dans le procédé de fonderie de la pièce,
- elle permet, si elle est partie constitutive d'un véhicule automobile, de contribuer à la réduction de masse du véhicule et, par conséquent, de participer à la réduction de l'émission de CO₂ dudit véhicule.

## Revendications

1. Pièce de fonderie (1), qui comporte au moins une surface d'appui optimale pour recevoir un élément mécanique de serrage, de type vis ou rondelle, destiné à la fixation d'un organe sur un orifice (2) de la pièce de fonderie, ladite surface d'appui optimale étant inscrite dans une zone annulaire (« A ») formant le pourtour dudit orifice (2), ladite pièce de fonderie étant **caractérisée en ce que** ladite surface d'appui optimale est formée de trois appuis (11, 12 13) répartis dans la zone annulaire (« A »), chaque appui (11, 12 13) présentant la forme d'un segment annulaire.

2. Pièce de fonderie selon la revendication 1, **caractérisée en ce que** lesdits segments annulaires (11, 12 13) sont inférieurs à 45° d'angle.

3. Pièce de fonderie selon l'une quelconque des revendications 1 et 2, **caractérisée en ce que** lesdits segments annulaires (11, 12 13) sont répartis angulairement de manière régulière.

4. Pièce de fonderie selon l'une quelconque des revendications 1 à 3, **caractérisée en ce qu'**elle est réalisée à partir d'aluminium.

5. Pièce de fonderie selon l'une des revendications précédentes, **caractérisée en ce qu'**elle est réalisée par un procédé de moulage de type « à modèle perdu ».

6. Pièce de fonderie selon l'une quelconque des revendications 1 à 5, **caractérisée en ce qu'**elle est une culasse de moteur de véhicule, ladite culasse intégrant, de manière « monobloc », au moins le boîtier de sortie d'eau du moteur.

7. Pièce de fonderie selon la revendication 6, **caractérisée en ce que** la surface d'appui optimale est une surface du boîtier de sortie d'eau servant d'appui à une rondelle destinée à la fixation du thermostat piloté dudit boîtier de sortie d'eau.

8. Véhicule, en particulier véhicule automobile, avec une culasse de moteur qui est une pièce de fonderie, **caractérisé en ce que** ladite pièce de fonderie est conforme à l'une quelconque des revendications 6 et 7.
